# EUROPÄISCHE PATENTANMELDUNG

(11) **EP 0 660 143 A2**
(43) Veröffentlichungstag der Anmeldung: **28.06.1995**
(21) Anmeldenummer: 94117310.6
(22) Anmeldetag: 03.11.1994
(51) Int. Cl.: G02B 6/30

(54) **Kopplervorrichtung zwischen einer Glasfaser und einem dielektrischen Wellenleiter**

(30) Priorität: 23.12.1993 DE 4344179
(71) Anmelder: KRONE Aktiengesellschaft, D-14160 Berlin-Zehlendorf (DE)
(72) Erfinder: Kerndlmaier, Walter, Dr., D-12205 Berlin (DE)

(57) **Zusammenfassung**

Die Erfindung bezieht sich auf eine Koppelvorrichtung zwischen einer Glasfaser (1) und einem auf einem Substrat (2) integrierten dielektrischen Wellenleiter (22).

Die Aufgabe der Erfindung, eine verlust- und rückstreuarme, aber kostengünstige Koppelvorrichtung zu entwickeln, wird dadurch gelöst, daß das Faserende (11,12) - vornehmlich durch Ziehen der Faser unter Wärmeeinwirkung bis zum Abriß - bis auf einen Durchmesser in der Größenordnung typischer Kernabmessungen von dielektrischen Wellenleitern reduziert wird und andererseits auf dem Substrat eine Faseraufnahme (21) vorgesehen ist, die sich in einer ähnlichen Form verjüngt und deren Spitze in den anzukoppelnden Wellenleiter übergeht. Dadurch wird erreicht, daß die Glasfaser bei der Montage nur noch in die Aufnahme bis zum Anschlag geschoben zu werden braucht und sich dabei von selbst auf den Wellenleiter hin zentriert, ohne daß Toleranzen in der Fasergeometrie zu einer Verlustzunahme führen könnten, wie es bei der Stirnflächenkopplung - dem Stand der Technik - der Fall ist.

## Beschreibung

Die Erfindung bezieht sich auf eine üblicherweise Faser-Chip-Kopplung genannte Koppelvorrichtung zwischen der Glasfaser und einem auf einem Substrat integrierten dielektrischen Wellenleiter.

In der integrierten Optik/Optoelektronik stellt sich eines der Hauptprobleme in Form der Realisierung einer kostengünstigen und verlustarmen Kopplung zwischen ankommenden/wegführenden Glasfasern und den dielektrischen Wellenleitern bzw. Funktionsbauelementen auf dem Chip. Wegen der speziell in der Monomode-Technik geringen Kerndurchmesser der Wellenleiter und damit Fleckdurchmesser des geführten Lichtes im Bereich um 10 µm sind erhebliche Anforderungen an die Justagetechnik zwischen Glasfasern und Chip zu stellen, da bereits Toleranzen im µm-Bereich zu erheblichen Ankoppelverlusten von mehreren dB führen würden.

Stand der Technik ist die Kopplung über planare Stirnflächen, wobei prinzipiell zwei Methoden zu unterscheiden sind.

Zum einen kann die Justage zwischen Faser und Chip aktiv erfolgen, d.h. die anzukoppelnde Faser wird bei eingeschalteter Lichtquelle vermittels Mikromanipulator solange relativ zum Chip bewegt, bis eine maximale Überkopplung detektiert wird. Anschließend erfolgt eine Fixierung der Faser am Chip. Dieses Verfahren garantiert zwar minimale Ankoppelverluste, stellt aber insbesondere bei verzweigenden Schaltungen einen erheblichen Kostenfaktor dar.

Die zweite Methode bedient sich einer passiven Justierung vermittels einer in das Substrat des Chips integrierten Faserführungsstruktur, üblicherweise einem V-förmigen Graben. Dieser Graben kann in Si durch anisotropes Ätzen erzeugt werden. Die Herstellung einer hochwertigen planaren Stirnfläche am Grabenende erfordert spezielle Verfahrensschritte, wie sie zum Beispiel in DE 41 42 850 und DE 41 34 940 beschrieben sind. Alternativ kann eine solche Grabenstruktur auch in Polymeren durch Abformverfahren erzeugt werden, wobei die Urform zum Beispiel mit dem in DE 42 12 208 beschriebenen Verfahren hergestellt werden kann.

Erlaubt die zweite Methode vom Prinzip her eine kostengünstige Fertigung integriert optischer Bauteile, so ergibt sie jedoch vergleichsweise hohe und nicht reproduzierbare Ankoppelverluste, da zum einen der Faserdurchmesser Schwankungen im Bereich einiger µm unterliegt und zum anderen auch der Faserkern exzentrisch zur Mittenachse liegen kann. Während die Auswirkung der Durchmesserschwankungen durch aufwendige Gegenmaßnahmen verringert werden kann, ist die Kernexzentrizität bei passiver Justage prinzipiell nicht kompensierbar. Weitere Probleme liegen in der Herstellung hochwertiger Stirnflächen am Grabenende sowie dem bei Stirnflächenkopplung grundsätzlichen Auftreten von Rückstreuungen in einem nicht immer tolerierbaren Maße, welche nur durch einen aufwendigen Schrägschliff verringert werden können.

Der vorliegenden Erfindung liegt daher die Aufgabe zugrunde, eine passive Faser-Chip-Koppeltechnik zu realisieren, die reproduzierbare, von der Größenordnung her mit der aktiven Technologie vergleichbare Ankoppelverluste sowie geringstmögliche Rückstreuung aufweist.

Zur Lösung dieser Aufgabe sieht die Erfindung die kennzeichnenden Merkmale des Anspruchs 1 vor.

Die erfindungsgemäße Koppelvorrichtung beruht im wesentlichen auf der Beobachtung, daß durch eine langsame und stetige Durchmesserverjüngung ("Tapern") der Glasfaser bis auf die Größenordnung typischer Kernabmessungen von dielektrischen Wellenleitern das geführte elektromagnetische Feld aus dem Kern der Glasfaser in ihren Mantel gezwungen werden kann, bzw. bei Durchmesservergrößerung wieder in den Kern zurückkoppelt, ohne nennenswerten Verlusten zu unterliegen; eine Tatsache, die zum Beispiel die Realisierung verlustarmer Schmelzkoppler ermöglicht. Die Durchmesserverjüngung der Glasfaser kann dabei kostengünstig durch ziehen der Faser unter Wärmeeinwirkung bewerkstelligt werden. Im Substrat der integriert optischen Schaltung ist andererseits eine geeignete Faseraufnahme vorzusehen, die beim Einschieben der Faser deren Spitze auf den Kernbereich des anzukoppelnden Wellenleiters zuführt. Die Führung muß dabei derart ausgebildet sein, daß zumindest im Bereich der Spitze ihr effektiver Brechungsindex geringer als derjenige der Glasfaser ausfällt, um in diesem Bereich eine Führung des elektromagnetischen Feldes zwischen Faser und Substrat zu gewährleisten. Der effektive Brechungsindex der Faserführung ist bei inhomogenem Material, d.h. bei nicht vollständig eingebetteter Faser, nach dem im IEEE Journal of Quantum Electronics (1988), 766, "The Azimuthal Effective-Index Method", E.A.J. Marcatili et al, vorgestellten oder einem ähnlichen Verfahren zu bestimmen.

Bei geeigneter, dem Fachmann geläufiger Dimensionierung der Glasfaserspitze, der Ankoppelstelle und des Wellenleiters in der integriert optischen Schaltung lassen sich sowohl die Ankoppelverluste als auch die Rückstreuung im gewünschten Rahmen halten.

Vorteilhafte Ausgestaltungen der Erfindung ergeben sich aus den Unteransprüchen.

Die Erfindung ist nachfolgend anhand der in den Zeichnungen dargestellen Ausführungsbeispiele näher erläutert. Es zeigen:
- Fig. 1: die schematische Darstellung einer erfindungsgemäßen Koppelvorrichtung nach einem ersten Ausführungsbeispiel,
- Fig. 2: die Koppelvorrichtung nach Fig. 1 in perspektivischer Ansicht,
- Fig. 3: eine Koppelvorrichtung nach einem zweiten Ausführungsbeispiel der Erfindung,
- Fig. 4: eine Koppelvorrichtung nach einem dritten Ausführungsbeispiel der Erfindung, und
- Fig. 5: eine Koppelvorrichtung nach einem vierten Ausführungsbeispiel der Erfindung.

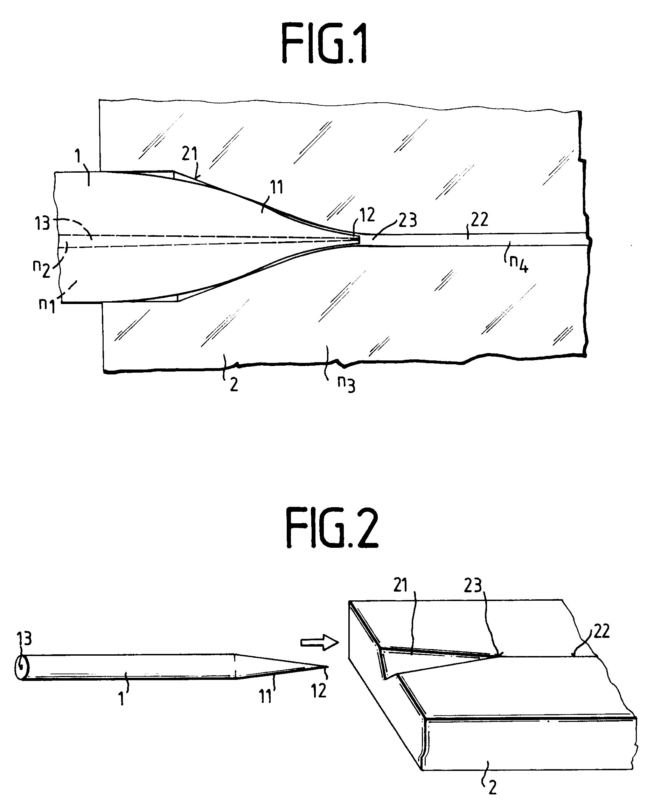

Die Fign. 1 und 2 zeigen den grundsätzlichen Aufbau der Koppelvorrichtung, bestehend aus einer Glasfaser 1 mit dem Brechungsindex n₂ des Kernes 13 und dem Mantelbrechungsindex n₁ < n₂, die am rechten Ende einen getaperten Bereich 11 mit einer Faserspitze 12 aufweist, sowie einem Substrat 2 der integriert optischen Schaltung (mit dem Brechungsindex n₃), einem Wellenleiter 22 (mit dem Brechungsindex n₄) und einer Faseraufnahme 21 im Substrat 2. Die "Spitze" 12 des getaperten Faserbereiches 11 sollte dabei einen Durchmesser im Bereich gängiger Kernabmessungen dielektrischer Wellenleiter aufweisen, um ein möglichst nahes Heranführen an den Anfang 23 des Wellenleiters 22 gewährleisten zu können.

Die Faseraufnahme 21 muß nicht notwendigerweise V-förmig wie in Fig. 2 dargestellt ausgeführt werden. Sie braucht lediglich die Glasfaser 1 beim Einschieben entlang zweier Linien zum Wellenleiter 22 hin zu führen und im eingeschobenen Zustand eine exakte Lagefixierung der Glasfaser 1 sicherzustellen. Um eine Feldführung auch im Bereich der Spitze 12 des Bereichs 11 zu gewährleisten, ist dafür Sorge zu tragen, daß der effektive Brechungsindex n_{3eff} in der Umgebung dieser Spitze kleiner als derjenige des Glasfasermantels n₁ ausfällt. Dies ist im einfachsten Fall durch Verwendung eines Substratmaterials 2 mit einem Brechungsindex n₃ < n₁ sicherzustellen, andernfalls kann durch eine entsprechende Querschnittsausformung der Faseraufnahme 21 mit nur dünnen Führungsstegen der effektive Brechungsindex n_{3eff} auf den gewünschten Wert eingestellt werden.

Der Brechungsindex n₄ des Wellenleiters 22 muß größer als der Substratbrechungsindex n₃ sein und sollte zusammen mit dem Wellenleiterquerschnitt - wie dem Fachmann geläufig - derart dimensioniert werden, daß die Feldverteilungen an der Spitze 12 des Bereichs 11 und dem Wellenleiteranfang möglichst gut übereinstimmen. Wie durch Simulationsrechnungen nachgewiesen werden kann, liegen optimale Werte des Wellenleiterbrechungsindex i.d.R. im Bereich n₄ ≈ n₁.

Es ist vorteilhaft, als Substrat 2 einen optisch transparenten Polymer zu verwenden, da zum einen sein Brechungsindex n₃ leicht auf den gewünschten Wert eingestellt werden kann und zum anderen die Strukturierung der Faseraufnahme 21 auf einfache Art und Weise durch Abformung von einer Masterstruktur vermittels Heißprägen, Spritzgießen o.ä. erfolgen kann. Zur Herstellung der Masterstruktur bieten sich Photolithographie, anisotropes Ätzen sowie Laserablation an. Wegen der häufigen Abformbarkeit eines solchen Masters spielt der Aufwand zu seiner Herstellung nur eine untergeordnete Rolle, so daß auch komplizierte Strukturen ausgebildet werden können.

Wird die Verjüngung des Bereichs 11 der Glasfaser 1 durch Ziehen unter Wärmeeinwirkung bis zum Abriß erzeugt, ergibt sich eine nichtgleichförmige aber reproduzierbare und dem Fachmann vom Profil her bekannte Durchmesserverjüngung entlang der Faserachse, die sogar geringere Verluste bewirkt als die in Fig. 2 dargestellte kegelförmige Verjüngung, so daß dieses Herstellverfahren vorteilhaft ist.

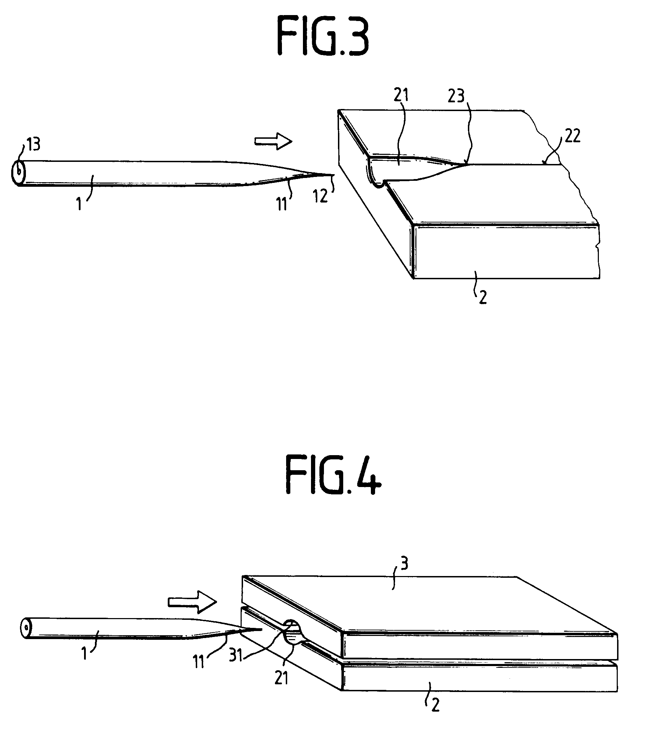

In Fig. 3 ist eine dem Faserziehprofil angepaßte der Koppelvorrichtung dargestellt. Sie besteht aus denselben Funktionselementen Glasfaser 1 mit (hier durch Ziehen) getapertem Faserbereich 11 und der Spitze 12, sowie dem Substrat 2 der integriert optischen Schaltung mit dem Wellenleiter 22 und der Faseraufnahme 21. Hier ist jedoch die Faseraufnahme 21 möglichst genau an das Ziehprofil der Glasfaser 1 angepaßt, um dieser möglichst guten Halt zu geben und Streuverluste zu minimieren.

Eine gute Faserführung und mechanische Stabilität im montierten Zustand gewährleistet die in Fig. 4 skizzierte vorteilhafte Ausführungsform. Hier enthält die integriert optische Schaltung nicht nur ein Substrat 2, sondern zusätzlich ein - im wesentlichen zu 2 spiegelbildliches - Deckelteil 3, in das ebenfalls ein Teil 31 der Faseraufnahme integriert ist.

Eine für die Herstellung besonders vorteilhafte Ausführungsform ergibt sich, wenn in Deckel 3 und Bodenteil 2 die wellenleitenden Strukturen beim Prägen/Spritzgießen als Gräben ausgeführt und anschließend diese Gräben durch einen geeigneten thermisch oder photochemisch vernetzbaren Vorpolymer ausgefüllt werden. Nach dem Zusammenfügen von Deckel 3 und Bodenteil 2 kann die Glasfaser 1 in die Aufnahme 21, 31 eingeschoben werden. Schließlich wird das Kernmaterial des Wellenleiters durch Wärmezufuhr bzw. UV-Bestrahlung ausgehärtet und damit Deckel 3, Bodenteil 2 und Glasfaser 1 miteinander verklebt.

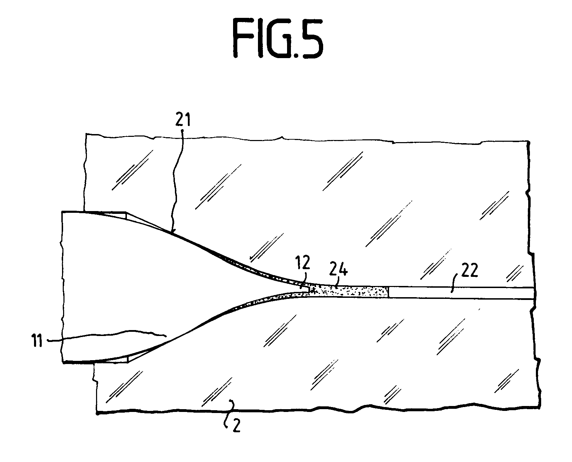

Eine andere vorteilhafte Ausführungsform der Koppelvorrichtung ist in Fig. 5 im Detail gezeigt. Hier wird bewußt eine Lücke 24 zwischen Wellenleiter 22 und Spitze 12 der eingeschobenen Glasfaser 1 gelassen, um diese Lücke 24 anschließend mit einem Brechungsindex-angepaßten, viskosen, aber eventuell aushärtbaren Material füllen zu können und somit geringstmögliche Ankoppelverluste und Rückstreuungen zu erhalten.

## Patentansprüche

1. Koppelvorrichtung zwischen einer Glasfaser und einem auf einem Substrat integrierten dielektrischen Wellenleiter,
**dadurch gekennzeichnet,**
daß die Glasfaser (1) zum mit dem Wellenleiter (22) gekoppelten Ende hin etwa bis in die Größenordnung der Kernabmessung des dielektrischen Wellenleiters (22) kontinuierlich verjüngt ist und daß in dem Substrat (2) eine Faseraufnahme (21) zur Führung des verjüngten Endes der Glasfaser (1) in eine der Stirnfläche des anzukoppelnden Wellenleiters (22) gegenüberliegende Position vorgesehen ist.

2. Koppelvorrichtung nach Anspruch 1, dadurch gekennzeichnet, daß die Verjüngung der Glasfaser (1) durch Ziehen im erwärmten Zustand erhalten ist.

3. Koppelvorrichtung nach Anspruch 1 oder 2, dadurch gekennzeichnet, daß das Substrat (2) aus einem Polymer mit einem im Vergleich zu dem der Glasfaser (1) geringeren Brechungsindex besteht.

4. Koppelvorrichtung nach einem der Ansprüche 1 bis 3, dadurch gekennzeichnet, daß die Führungsfläche der Faseraufnahme (21) mindestens aus zwei Ebenen besteht.

5. Koppelvorrichtung nach einem der Ansprüche 2 bis 4, dadurch gekennzeichnet, daß die Faseraufnahme (21) im Substrat (2) an das beim Ziehen der Glasfaser (1) entstandene Verjüngungsprofil angepaßt ist.

6. Koppelvorrichtung nach einem der Ansprüche 1 bis 5, dadurch gekennzeichnet, daß sich das Substrat aus einem Deckel-(3) und einem Bodenteil zusammensetzt, die jeweils einen Teil (31,21) der Faseraufnahme enthalten, derart, daß diese die aufgenommene Glasfaser (1) vollständig umgibt.

7. Koppelvorrichtung nach einem der Ansprüche 1 bis 6, dadurch gekennzeichnet, daß zwischen der Spitze der Glasfaser (1) und der gegenüberliegenden Stirnfläche des Wellenleiters (22) ein Abstand besteht und daß die hierdurch auftretende Lücke durch ein Polymer oder einen anderen optisch transparenten Stoff mit geeignetem Brechungsindex geschlossen ist.

8. Koppelvorrichtung nach einem der Ansprüche 1 bis 6, dadurch gekennzeichnet, daß das Kernmaterial des Wellenleiters (22) im viskosen Zustand auf das Substrat (2) aufgebracht ist und zur Sicherstellung einer Verklebung der Glasfaser (1) erst ausgehärtet wird, nachdem diese in der Faseraufnahme (21) aufgenommen ist.
